# EUROPEAN PATENT APPLICATION

(11) **EP 1 791 366 A1**
(43) Date of publication of application: **30.05.2007**
(21) Application number: 05292528.6
(22) Date of filing: 28.11.2005
(51) Int. Cl.: H04N 7/24, H04Q 7/32, H04L 12/56

(54) **Avoiding interruptions in the reproduction of audio/video by storing enough data in advance at a mobile terminal**

(71) Applicant: Alcatel Lucent, 75008 Paris (FR)
(72) Inventor: Faye, Jean-Claude, 91170 Gif sur Yvette (FR); Capdevielle, Véronique, 78114 Magny les Hameaux (FR); Rouffet, Denis, 92100 Boulogne Billancourt (FR)
(74) Representative: Schäfer, Wolfgang

(57) **Abstract**

The invention relates to a method of operating a radio communications network (100), wherein data is transmitted from a base station (10) of said network (100) to a terminal (20) via a radio link (15). Said data is normally real-time data, like audio and video (e.g. television images, mp3 files, video files from a server, etc.. Normally, said radio link is affected by adverse conditions, and hence the quality of the link decreases. Due to said lack of quality in the link, the downloading of video/audio may suffer interruptions /disruptions which could be very undesirable for the user.
The inventive method is characterized in that data to be transmitted from said base station (20) to said terminal (20) is transmitted in advance to said terminal depending on current data transmission conditions of said radio link (15) and stored to a cache memory (21) of said terminal.

## Description

The invention relates to a method of operating a radio communications network, wherein data is transmitted from a base station of said network to a terminal via a radio link.

The invention further relates to a terminal capable of receiving data from a base station of a radio communications network via a radio link, as well as to a base station.

Methods and systems of the above mentioned type are known from prior art and suffer from disadvantages such as discontinuities in a radio coverage which enables said radio link between the base station and the terminal. Such discontinuities may e.g. cause interruptions of a data transmission between the base station and the terminal and are thus highly undesired.

In particular, voice services and other real time services require an increased part of available radio resources if a carrier to interference ratio (C/I) decreases. If the real time traffic is not limited in such situations, the data transmission to the terminal, which may in particular be a non-real time data transmission, is affected or even interrupted.

Several approaches to cope with the above mentioned disadvantages of prior art have been proposed by now.

Firstly, advanced radio technologies such as Space Time Coding or transmission methods which are based on smart antennas and which take profit of spatial diversity have been proposed. These solutions have a complexity cost and their efficiency has not yet been proved in real deployment cases.

A second approach to tackle the problem of radio coverage discontinuities is based on a densification of the radio deployment, which is not favourable since it increases network costs.

Yet another approach, which is based on call admission control (CAC) mechanisms, disadvantageously limits the number of possible users of a corresponding radio communications network.

Still a further approach known from prior art comprises using scalable codecs such as "Packet Video". However, solutions based on scalable codecs do not guarantee seamless services, because if there are poor radio transmission conditions, in particular the quality of video data so transmitted is heavily degraded, and in the worst case, only voice data will be transmitted.

Therefore, it is an object of the present invention to provide an improved method of operating a radio communications network with better service availability and reliability as compared to prior art solutions.

According to the present invention, said object is achieved by transmitting data, that is to be transmitted from said base station to said terminal, to said terminal in advance depending on current data transmission conditions of said radio link, and by storing said data which has been transmitted in advance to a cache memory of said terminal.

The inventive method thus enables to store in the terminal's cache in advance data that may be consumed by the terminal or its user, respectively, in the future. Said transmission in advance is preferably performed as long as the current data transmission conditions of said radio link are sufficient for such a data transmission.

The inventive solution of transmitting data from the base station to the terminal in advance ensures that a maximum amount of data is transmitted to said terminal as long as the radio link is operable, i.e. there are no discontinuities in the radio coverage of the terminal. Should there be any discontinuities in the future, the terminal operated according to the present invention has a substantial amount of previously transmitted data in its cache which may be consumed during the discontinuities.

Thus, particularly if the terminal is a mobile terminal, employing the inventive method reduces the probability of an interruption of any service based on said data transmission to the terminal or the data delivery to a terminal's user from the cache memory, respectively. The terminal or its user advantageously experiences a seamless service despite intermittent connectivity.

According to an advanced embodiment of the present invention, data which is transmitted in advance to said terminal is transmitted with the highest data rate possible for said data transmission. Thereby, the time required for filling the cache memory of the terminal is minimized, and furthermore, the probability of experiencing a radio coverage discontinuity during filling said cache memory is also reduced.

According to a further advantageous embodiment of the present invention, a data rate for transmitting data in advance to said terminal is selected depending on a carrier to interference ratio (C/I) of said radio link between said base station and said terminal. Thus, in situations with a comparatively large carrier to interference ratio, data transmissions may be performed at a comparatively high data rate, while during situations with a comparatively low carrier to interference ratio, a comparatively low data rate may be employed for the data transmission between the base station and the terminal.

Yet another very advantageous embodiment of the present invention proposes that no data is transmitted from said base station to said terminal if a maximum possible data rate is below a predetermined threshold. This ensures that data transmissions with extremely low data rates are avoided, which would be very inefficient because of usual protocol overheads and the like.

According to another advantageous embodiment of the present invention, no data is transmitted from the base station to said terminal if a current carrier to interference ratio of said radio link between said base station and said terminal is below a predetermined threshold.

According to yet another advantageous embodiment of the present invention, a data transmission from said base station to said terminal is performed depending on a filling status of said cache memory of said terminal, which inter alia enables to interrupt a data transmission or to reduce the data rate, respectively, if the cache memory of the terminal is full. On the other hand, according to this variant of the inventive method, it is also possible to increase a data rate used for the data transmission to the terminal if the cache memory of the terminal is not sufficiently filled. It is also possible to enforce a data transmission at a very low data rate to avoid starving of the terminal or its cache memory, respectively.

Another advantageous embodiment of the present invention proposes that said terminal consumes data that has previously been stored to its cache memory depending on a current data rate and/or carrier to interference ratio of said radio link between said base station and said terminal. Correspondingly, the terminal may retrieve data from its cache memory, if a current data rate or carrier to interference ratio is decreasing, and so on.

According to another advantageous embodiment of the present invention, said terminal detects data transmission conditions by radio measurements, in particular by analysing a radio signal received from said base station. The terminal advantageously transmits information on said data transmission conditions to said base station which e.g. enables the base station to adapt a data rate currently being used for a data transmission from the base station to the terminal.

Preferably, according to a further embodiment of the present invention, said step of detecting data transmission conditions and/or transmitting information on said data transmission conditions to said base station is performed periodically.

A further embodiment of the present invention proposes to classify a radio coverage area of said base station into several areas depending on data transmission conditions, in particular depending on the maximum data rate currently possible in the respective area.

The inventive classification of the radio coverage area may e.g. be performed depending on a distance from the base station, or from the antennas of said base station, respectively, or depending on further factors which influence the radio coverage. It is also possible to dynamically classify the radio coverage area based on current data transmission conditions determined by terminals or other network elements.

The classification may e.g. be used to control the data rates chosen for data transmissions between the base station and the terminal in a very simple manner.

A further solution to the object of the present invention is given by a terminal according to claim 13.

Said inventive terminal is capable of receiving data from a base station of a radio communications network via a radio link. The terminal is advantageously equipped with a cache memory and is further configured to receive in advance data to be transmitted from said base station to said terminal depending on current data transmission conditions of said radio link and to store said data received in advance to said cache memory.

Preferably, the terminal is a mobile terminal.

Yet a further solution to the object of the present invention is given by a base station according to claim 16.

Further advantages and features of the present invention are described in the following detailed description with reference to the drawings, in which
- Figure 1: shows a typical network scenario employing a first embodiment of the present invention, and
- Figure 2: shows a simplified flow chart depicting an embodiment of the inventive method.

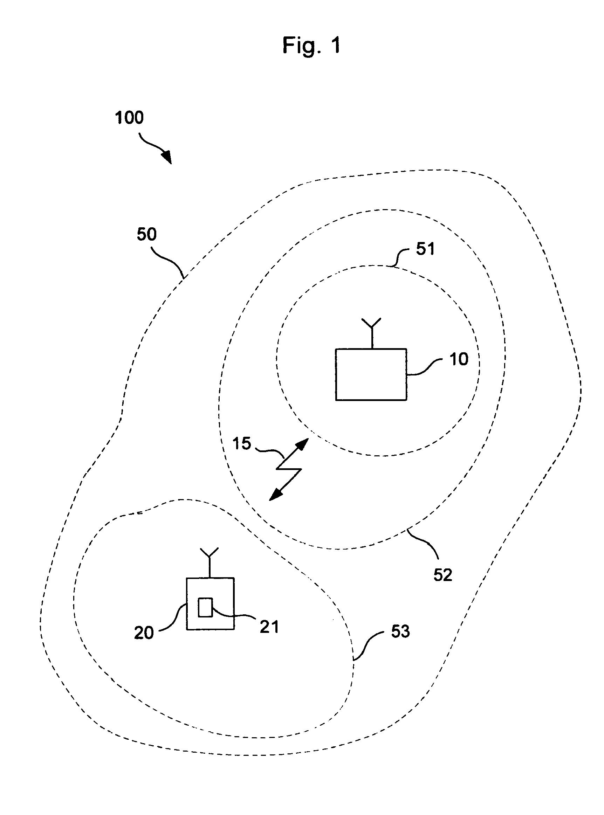

Figure 1 depicts a radio communications network 100 which comprises a base station 10 and a mobile terminal 20 that is capable of exchanging data via a radio link 15 between the base station 10 and the terminal 20.

Figure 1 also depicts a radio coverage area 50 of the base station 10. Said radio coverage area 50 is classified into various areas 51, 52, 53 each of which is characterized by specific data transmission conditions such as a maximum data transmission rate or a carrier to interference ratio.

For instance, area 51 which is next to the base station 10, is characterized by a comparatively high data transmission rate which is due to the proximity of a area 51 to the base station 10.

In contrast thereto, area 52 does not support such a high data transmission rate as is given within area 51. The next area, area 53, which currently comprises the mobile terminal 20, is characterized by the lowest possible data transmission rate within the whole radio coverage area 50 of base station 10.

In order to provide seamless services based on said data transmission to the terminal 20, particularly during periods in which said mobile terminal 20 is moving around in an area 53 with an extremely low data transmission rate, according to the present invention, data to be transmitted from said base station 10 to said terminal 20 for providing the respective services is transmitted in advance to said terminal 20 and is stored to a cache memory 21 of said terminal 20.

Said transmission in advance to the terminal 20 is advantageously performed depending on current data transmission conditions. I.e., if the terminal 20 is currently within area 51, which is characterized by a comparatively high carrier to interference ratio, the transmission in advance may be conducted with a comparatively high data rate.

If the terminal 20 is currently within the area 53 that does not offer a sufficient data rate, no data is transmitted to the terminal, and so on.

Accordingly, the inventive method enables to fill the cache memory 21 of the terminal 20 preferably during such periods in which the terminal 20 is moving through areas 51, 52 with a comparatively high available data transmission rate.

However, when the terminal 20 leaves the areas 51, 52 and moves to an area 53 with a comparatively low data transmission rate, said terminal 20 may consume data that has previously been stored to its cache memory 21 in order to maintain the data delivery to a user of said terminal 20 thus providing a seamless service to the user despite any possible discontinuities in the radio coverage.

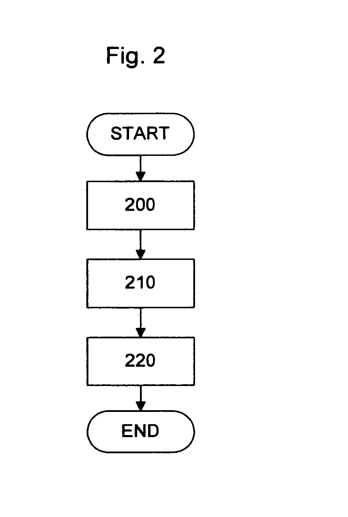

A more detailed example of the inventive method is given below with reference to the flow chart of figure 2.

Within step 200, the terminal 20 detects data transmission conditions by radio measurements, in particular by analysing a radio signal originating from the base station 10, which is being received by the terminal 20.

After that, within step 210, the terminal 20 transmits information on said data transmission conditions to said base station 10.

Said information on said data transmission conditions may e.g. comprise a carrier to interference ratio currently calculated by said terminal 20 based on the radio measurements performed within step 200.

According to step 220, the base station 10 adapts a data transmission rate which is used for data transmission between said base station 10 and said terminal 20.

In the present example, the information on data transmission conditions forwarded to the base station 10 indicates that (in contrast to the situation depicted in Figure 1) the terminal 20 currently is in an area 51 which is characterized by a comparatively high carrier to interference ratio which enables a comparatively high data rate for data transmissions from the base station 10 to the terminal 20.

Correspondingly, the base station 10 selects a comparatively high data rate within step 220 for further data transmissions to the terminal 20.

This advantageously enables to store in advance large amounts of data to be transmitted to the terminal 20 within the terminal's cache memory 21. The data stored to said cache memory 21 of the terminal 20 may later on be used by the terminal, in particular in such cases, when the available data rate is very low, cf. Figure 1, or if there is no data transmission possible between the base station 10 and the terminal 20 at all. Thus, by consuming cached data, radio coverage discontinuities can be compensated and a seamless data delivery to the terminal 20 is experienced by a user of said terminal 20.

Hence, despite the intermittent connectivity between the base station 10 and the terminal 20 which is due to radio coverage discontinuities within the radio coverage area 50 of the radio communications network 100 a seamless service experience is guaranteed by employing the method according to the present invention.

The inventive classification of the base station's 10 radio coverage area 50 enables a very simple determination of the periods in which data transmissions for filling the terminal's cache memory 21 are to be performed.

According to a very advantageous embodiment of the present invention, the above explained steps 200, 210 of the flow chart of Figure 2 are performed periodically to ensure that current radio transmission conditions are properly assessed and used to adapt the data rate.

Another advantageous embodiment of the inventive method proposes to perform a data transmission from the base station 10 to the terminal 20 depending on a filling status of the cache memory 21 of the terminal 20.

If the size of the cache memory 21 is appropriately chosen depending on a maximum data rate for the data transmissions to the terminal 20 and an estimated degree of radio coverage discontinuities, a terminal 20 moving around the radio coverage area 50 is most probably able to timely refill its cache by using the inventive method of transmitting data in advance to the terminal 20, whereby starving of the terminal's cache becomes highly improbable.

Thus, by employing comparatively simple hardware such as a large cache memory 21 and the inventive method providing for filling the cache in an efficient manner during periods with high data rates, an increased service availability and reliability may be provided to a user of the terminal 20.

Furthermore, an operator of the radio communications network 100 will also benefit from the application of the inventive method in that a cellular capacity is increased and in that no complex additional hardware or further disadvantageous measures such as scalable codecs or call admission control mechanisms are required.

Although the operation of the inventive method has been described with reference to a base station 10, any network element capable of transmitting or forwarding data to a terminal 10 may employ the inventive method.

The inventive method may advantageously be applied to UMTS (Universal Mobile Telecommunications System) radio access networks, UTRAN (UMTS Terrestrial Radio Access Network), WiMax (Worldwide Interoperability for Microwave Access) systems, and generally to any other radio access network.

## Claims

1. Method of operating a radio communications network (100), wherein data is transmitted from a base station (10) of said network (100) to a terminal (20) via a radio link (15), **characterized in that** data to be transmitted from said base station (10) to said terminal (20) is transmitted to said terminal (20) in advance depending on current data transmission conditions of said radio link (15), and **in that** said data which has been transmitted in advance is stored to a cache memory (21) of said terminal (20).

2. Method according to claim 1, **characterized in that** said data which is transmitted in advance to said terminal (20) is transmitted with the highest data rate possible for said data transmission.

3. Method according to one of the preceding claims, **characterized in that** a data rate for transmitting data in advance to said terminal (20) is selected depending on a carrier to interference ratio, C/I, of said radio link (15) between said base station (10) and said terminal (20).

4. Method according to one of the preceding claims, **characterized in that** no data is transmitted from said base station (10) to said terminal (20) if a maximum possible data rate is below a predetermined threshold.

5. Method according to one of the preceding claims, **characterized in that** no data is transmitted from said base station (10) to said terminal (20) if a current carrier to interference ratio, C/I, of said radio link (15) between said base station (10) and said terminal (20) is below a predetermined threshold.

6. Method according to one of the preceding claims, **characterized in that** a data transmission from said base station (10) to said terminal (20) is performed depending on a filling status of said cache memory (21) of said terminal (20).

7. Method according to one of the preceding claims, **characterized in that** said terminal (20) consumes data that has previously been stored to its cache memory (21) depending on a current data rate and/or carrier to interference ratio, C/I, of said radio link (15) between said base station (10) and said terminal (20).

8. Method according to one of the preceding claims, **characterized in that** said terminal (20) detects data transmission conditions by radio measurements, in particular by analysing a radio signal received from said base station (10).

9. Method according to claim 8, **characterized in that** said terminal (20) transmits information on said data transmission conditions to said base station (10).

10. Method according to one of the claims 8 or 9, wherein said step of detecting data transmission conditions and/or transmitting information on said data transmission conditions to said base station (10) is performed periodically.

11. Method according to one of the preceding claims, **characterized in that** a radio coverage area (50) of said base station (10) is classified into several areas (51, 52, 53) depending on data transmission conditions, in particular depending on the maximum data rate currently possible.

12. Method according to one of the preceding claims, **characterized in that** said terminal (20) is a mobile terminal.

13. Terminal (20) capable of receiving data from a base station (10) of a radio communications network (100) via a radio link (15), **characterized by** a cache memory (21) and **characterized in that** said mobile terminal (20) is configured to receive in advance data to be transmitted from said base station (20) to said terminal (20) depending on current data transmission conditions of said radio link (15) and to store said data received in advance to said cache memory (21).

14. Terminal (20) according to claim 13, wherein said terminal (20) is a mobile terminal.

15. Terminal (20) according to one of the claims 13 to 14, **characterized in that** said terminal is configured to perform the method according to one of the claims 1 to 12.

16. Base station (10) configured to perform the method according to one of the claims 1 to 12.
